# EUROPEAN PATENT APPLICATION

(11) **EP 4 564 202 A1**
(43) Date of publication of application: **04.06.2025**
(21) Application number: 24194518.7
(22) Date of filing: 14.08.2024
(51) Int. Cl.: G06F 21/32

(54) **SYSTEM, METHOD AND CARD ISSUANCE TERMINAL FOR ENABLING ENROLMENT OF A BIOMETRIC-ENABLED CARD**

(30) Priority: 01.12.2023 IN 202311081842
(71) Applicant: Giesecke+Devrient ePayments GmbH, 81677 München (DE)
(72) Inventor: Katikar, Prajakta Milind, 110 020 New Delhi (IN); Dhande, Sandip Vishwanath, 110 020 New Delhi (IN)
(74) Representative: LKGLOBAL Lorenz & Kopf Patentanwalt Attorney at Law PartG mbB

(57) **Abstract**

The invention relates to a system (1) and a method for enabling enrolment of a biometric-enabled card (10). The system (1) comprises a biometric-enabled card (10) and a card issuance terminal (20) having an NFC unit (22) and an HMI (24). The card (10) establishes a secured communication channel between the card (10) and the terminal (20) via the NFC unit (22) and a biometric sensor (12) of the card (10) captures biometric details of a user (30). The terminal (20) initiates a biometric enrolment via the NFC unit (22) and provides, via the HMI (24), instructions or steps for providing guidance for placement of the card (10) near the NFC (22) unit and for providing a biometric template. The terminal (20) further receives the biometric details of the user (30), authenticates the user (30), and validates and completes the biometric enrolment of the card (10) upon positive authentication of the user (30).

## Description

The present invention generally relates to the field of biometric cards. In particular, the present invention relates to a system and a method for enabling enrolment of a biometric-enabled card. Furthermore, the present invention relates to a card issuance terminal for issuing a biometric-enabled card and for enabling enrolment of a biometric-enabled card.

Biometric authentication is widely recognized as a robust and secure method for verifying an individual's identity. Biometric-enabled cards have gained substantial popularity and relevance in various applications, including access control, financial transactions, and identity verification. These cards typically incorporate biometric sensors, such as fingerprint scanners, iris scanners, or facial recognition systems, to enhance security and user convenience. However, despite their numerous benefits, the enrolment process of biometric data onto these cards presents several challenges and issues that need to be addressed to ensure the widespread adoption and effectiveness of such cards. In particular, the enrolment processes usually rely on a cooperation of various instances, each of which has its own function within the system and must provide the required information when requested in a timely manner.

Existing solutions may rely on a specialized biometric enrolment device, where the cardholder is required to carry out the enrolment process on their own using this enrolment device, which is designed for single-use purposes. While this approach is intended to enhance security and streamline the enrolment process, it presents several issues. Firstly, the use of a dedicated enrolment device adds to the overall cost of producing each biometric payment card. This cost increase can deter the widespread adoption of biometric cards and limit their accessibility to a broader consumer base. Secondly, the security implications of this approach may sometimes be concerning. As the enrolment device remains in the possession of the cardholder, it also poses a potential security threat. Unauthorized access to the device may compromise the biometric data stored on the card, undermining the very purpose of biometric authentication.

Other alternative solutions may require users to physically visit a bank for the enrolment process, which is neither customer-friendly nor economically viable. It may impose inconvenience on the cardholder and may add unnecessary administrative burdens to financial institutions.

It may be seen as an object of the invention to further improve biometric enrolment procedures for biometric-enabled cards.

A system, a method and a card issuance terminal according to the features of the independent claims are provided. Further embodiments of the invention are evident from the dependent claims, the figures and the following description.

According to an aspect of the invention, a system for enabling enrolment of a biometric-enabled card is provided. The system comprises a biometric-enabled card and a card issuance terminal with a Near Field Communication (NFC) unit and a human machine interface (HMI). The card issuance terminal may be configured to issue the biometric-enabled card to a user. The biometric-enabled card comprises a biometric sensor and a processing unit which operatively coupled to the biometric sensor. The processing unit is configured to establish a secured communication channel between the biometric-enabled card and the card issuance terminal via the NFC unit, upon initiation of a biometric enrolment procedure. The processing unit is configured to allow the biometric sensor to capture biometric details of the user upon initiation of the biometric enrolment procedure. The card issuance terminal is configured to initiate the biometric enrolment procedure via the NFC unit. The card issuance terminal is further configured to provide, via the HMI of the card issuance terminal, one or more instructions or steps for providing guidance for placement of the biometric-enabled card near the NFC unit and for providing a biometric template for the biometric enrolment procedure. The card issuance terminal is further configured to receive, from the biometric-enabled card, biometric details being provided by the user in response to the one or more instructions or steps and while completing the biometric template. The card issuance terminal is further configured to authenticate the user after completion of the biometric template. The card issuance terminal is further configured to validate and complete the biometric enrolment procedure for the biometric-enabled card upon positive authentication of the user.

With the inventive system, it is possible to reduce the number of instances and/or devices required for a biometric card enrolment procedure. In particular, the entire enrolment procedure for the biometric-enabled card may be carried out based on using the biometric-enabled card and the card issuance terminal. In other words, no third-party instances or devices are necessary to carry out the biometric enrolment procedure for the biometric-enabled card. Additionally, all instructions that are to be given to the user during the enrolment procedure may be provided via the HMI, preferably a display unit, of the card issuance terminal, so that the user may receive all relevant enrolment information via the card issuance terminal. Merely the authentication of the user which may be a part of the biometric enrolment procedure may include a receipt of a password, for example a one-time password (OTP) or the like from a server or an issuer of the biometric-enabled card, e.g., from a bank server, an application programming interface connected to the bank server, or from an operator of the card issuance terminal. This authentication may include a two-factor-authentication (2FA).

The inventive system generally reduces the number of instances or devices that are used for the biometric enrolment procedure and therefore reduces the number of data connections between different instances or devices, thereby reducing the risk that any of the instances, devices or data connections are subject to fraudulent activities.

The biometric-enabled card may be a card-like data carrier that is configured to capture biometric details of the user such as fingerprint details, iris details, or facial details of the user to enhance security and user convenience. In particular, after having successfully completed the enrolment procedure, the user can use the biometric-enabled card to confirm their identity which in turn enables the user to use various functionalities implemented with the card. The inventive system may thus be applied to activate the card in order to allow using these functionalities.

The card issuance terminal may be configured to enable enrolment of a biometric-enabled card which is newly and instantly issued at said card issuance terminal and/or to enable enrolment of a biometric-enabled card which is already present and brought by the user.

In the first case, the card issuance terminal may directly issue the biometric-enabled card to a user before starting the biometric enrolment procedure, i.e., before the user uses the issued card to go through the enrolment procedure.

In the second case, the card issuance terminal may be used for renewal of an already existing biometric-enabled card of a user who brings along the card for the enrolment procedure in order to renew this existing card. This may also encompass the usage of the card issuance terminal for biometric enrolment of biometric-enabled cards issued by a third party. In particular, the biometric-enabled card may be issued by any provider or issuer and the biometric enrolment procedure at the card issuance terminal as described herein may be used to also allow a biometric enrolment of biometric-enabled cards issued by such a third party.

The card issuance terminal may be stand-alone device which includes the required software to carry out the biometric enrolment procedure. It comprises the HMI via which the information can be visually, optically, haptically or audibly provided to the user. Preferably, the HMI comprises a display unit, e.g., a monitor, via which instructions are provided to the user in a visual manner.

The card issuance terminal may also include a processor unit and/or a data storage unit. The processor of the card issuance terminal may be configured to process the information, e.g., biometric details, the biometric template and/or other input information provided by the user before or during the biometric enrolment procedure.

The biometric template may include biometric information of the user, for example fingerprint information of the user, but it may also include personal information of the user, for example address, nationality, place of birth or the like. The biometric information may be provided via the biometric sensor of the card. Any additional information may also be provided to the card issuance terminal, for example via the HMI, in order to complete the biometric template.

The card issuance terminal may be configured to transfer all information between the biometric-enabled card and the card issuance terminal via the NFC unit that is integrated into the card issuance terminal. In particular, the NFC unit may define a card placement region adjacent the card issuance terminal in which the biometric-enabled card is to be placed such that a communication and thus a data transfer between the biometric-enabled card and the card issuance terminal is possible. The one or more instructions or steps for providing guidance for placement of the biometric-enabled card near the NFC unit may include an indication where the user has to place or hold the biometric-enabled card in order to allow said communication between the biometric-enabled card and the card issuance terminal.

This communication between the biometric-enabled card and the card issuance terminal via the NFC unit may be encrypted, in particular entirely encrypted, such that a secured communication channel is established via the NFC unit.

The card issuance terminal may also include an input unit via which the user can, additionally, input required information to complete the biometric enrolment procedure. For example, the user can type in or enter the required information via a touchscreen or a keyboard of the HMI.

The card issuance terminal may therefore request various information from the user, step-by-step, which the user can input into the input unit of the card issuance terminal.

According to an embodiment, the NFC unit is an NFC chip encoder which is integrated into the card issuance terminal.

The NFC unit may be an integral part of the card issuance terminal. Communication via the NFC unit allows an easy and secure communication between the biometric-enabled card and the card issuance terminal. The user merely needs to know where the biometric-enabled card should be placed in order to allow for an optimal communication. This placement information may be visually provided to the user via the HMI as described above.

According to an embodiment, the HMI comprises a display unit for visually displaying the one or more instructions or steps for providing the guidance for placement of the biometric-enabled card near the NFC unit and for providing the biometric template for the biometric enrolment procedure.

For example, the display unit may visually indicate the placement region where the biometric-enabled card should be placed in order to allow the communication via the NFC unit of the card issuance terminal. This provides a very intuitive way for the user to conduct the biometric enrolment procedure as most or all actions and activities that the user has to carry out during the biometric enrolment procedure can be visually presented to the user.

According to an embodiment, the biometric-enabled card is selected from a group comprising a smart card and a payment card.

For example, the biometric-enabled card may be credit card or a debit card. Other card types are possible. The biometric-enabled card may allow a user to get access to bank accounts or banking services after positive authentication of the user with the biometric enrolment procedure as described herein.

According to an embodiment, the processing unit of the biometric-enabled card is configured to establish the secured communication channel between the biometric-enabled card and the card issuance terminal via the NFC unit when the biometric-enabled card is placed according to the guidance for placement of the biometric-enabled card near the NFC unit.

As indicated above, the user may be given an information via the HMI how to place the biometric-enabled card relative to the card issuance terminal, i.e., relative to the NFC unit. This may include indicating to the user a card placement region within which the biometric-enabled card is to be placed such that the secured communication channel can be established between the card and the terminal. It is possible that the secured communication channel will be established as soon as the biometric-enabled card is located within the card placement region. Furthermore, it may be required that the user has to touch the biometric sensor of the biometric-enabled card to start establishing said secured communication, for example at the same time the card is placed within the card placement region.

According to an embodiment, the card issuance terminal is further configured to indicate, via the HMI of the card issuance terminal, an instruction to the user to at least once place a finger onto the biometric sensor of the biometric-enabled card.

For example, to start the biometric enrolment procedure, the user has to touch the biometric sensor of the card. A corresponding indication to do so may be provided to the user via the HMI. It is possible that the user is required to put at least one finger onto the biometric sensor of the card to start the biometric enrolment procedure. If a recognition of the fingerprint was not possible, the user may again be requested to put at least one finger onto the biometric sensor.

According to an embodiment, the card issuance terminal is configured to authenticate the user after completion of the biometric template by: receiving a one-time password (OTP) and/or a unique password from the user via a registered mobile device of the user and by transmitting, on the registered mobile device of the user, an enrolment completion confirmation message upon positive authentication of the user.

In this manner, the user can be informed about the successful enrolment process. The OTP and/or the unique password required for this authentication may be provided by a server or via an application programming interface of the issuer or provider of the biometric-enabled card. For example, the OTP and/or the unique password may be sent to the registered mobile device, for example a mobile phone, a smartphone, a tablet or the like, associated to the user. Thus, the mobile device and/or the server, e.g., the issuer or provider of the biometric-enabled card, may be part of the inventive system as well.

In particular, the card issuance terminal may transmit a request to the server, issuer or provider to send the OTP and/or the unique password to a mobile number of the registered mobile device associated with the user. Having received the OTP and/or the unique password at the registered mobile device, the user is asked via the mobile device and/or via the HMI of the card issuance terminal to input the OTP and/or the unique password into the mobile device or directly into the card issuance terminal. Once the OTP and/or the unique password has been input and thus received by the mobile device, the user may be informed about a successful and thus positive authentication via the mobile device and/or via the card issuance terminal.

According to an embodiment, upon positive authentication of the user, the card issuance terminal is further configured to transmit, via the NFC unit, an authentication information to the biometric-enabled card indicating that the biometric template is to be stored on the biometric-enabled card.

The biometric template may include the personal and/ or biometric information of the user which has been provided by the user during the biometric enrolment procedure. Together with the authentication information, this personal and/or biometric information may be sent to the biometric-enabled card, for example via the NFC unit, thereby enabling the biometric-enabled card to save the biometric template and thus the personal and/or biometric information of the user on the card itself. The biometric template and the corresponding personal and/or biometric information may also be transmitted via the secured channel established between the card issuance terminal and the biometric-enabled card.

According to an embodiment, the processing unit of the biometric-enabled card is further configured to store the biometric template in a data storage unit of the biometric-enabled card, upon positive authentication of the user.

The biometric-enabled card may include a chip in which the processing unit and the data storage unit are integrated. The biometric template may be stored in the data storage unit, after the card issuance terminal has transmitted the authentication information to the biometric-enabled card.

According to an embodiment, the processing unit of the biometric-enabled card is further configured to set an activation status for the biometric-enabled card, upon positive authentication of the user, thereby enabling one or more card functions provided by the biometric-enabled card.

For example, the biometric-enabled card may only be used after the biometric enrolment and the authentication have been successfully completed. Otherwise, the biometric-enabled card may not function properly or not function at all. In other words, setting the activation status for the biometric-enabled card allows the full functionality of the card. The activation status may be automatically set after the authentication information and/or the biometric template has been received from the card issuance terminal.

According to an embodiment, the card issuance terminal is selected from a group comprising a Point-of-Sale (POS) terminal, an Automated Teller Machine (ATM), and a Near Field Communication (NFC) terminal.

The card issuance terminal may be a part of said devices or may be additionally integrated into these devices.

According to an embodiment, the biometric enrolment procedure is initiated at the card issuance terminal upon operatively connecting the biometric-enabled card to the card issuance terminal while placing a finger on the biometric sensor by the user.

In this case, the secured connection between the biometric-enabled card and the card issuance terminal may only be established when the user places their finger onto the biometric sensor. Otherwise, the enrolment procedure may not be started. It is possible that the user is required to place two or even more fingers, for example one after the other, onto the biometric sensor in order to allow initiation of the biometric enrolment procedure at the card issuance terminal.

According to an embodiment, the card issuance terminal is further configured to provide electrical energy to the biometric-enabled card via the NFC unit.

In particular, the biometric sensor may require electrical energy to sense or scan the fingerprint of the user required for the biometric enrolment procedure. This energy may be supplied via the NFC unit to the biometric-enabled card, for example to an energy storage unit, e.g., a battery, of the biometric-enabled card. In this manner, the biometric-enabled card does not need any initial power, i.e., electrical energy, to start the biometric enrolment procedure since the electrical energy may be transferred from the card issuance terminal to the biometric-enabled card.

According to an aspect, a method for enabling enrolment of a biometric-enabled card is provided. A step of the method comprises initiating, by a card issuance terminal, a biometric enrolment procedure via a Near Field Communication (NFC) unit of the card issuance terminal. Another step of the method comprises providing, via a human machine interface (HMI) of the card issuance terminal, one or more instructions or steps for providing guidance for placement of the biometric-enabled card near the NFC unit and for providing a biometric template for the biometric enrolment procedure. Another step of the method comprises establishing, by a biometric-enabled card, a secured communication channel between the biometric-enabled card and the card issuance terminal via the NFC unit upon initiation of the biometric enrolment procedure. Another step of the method comprises capturing, by the biometric-enabled card, biometric details of a user. Another step of the method comprises receiving, by the card issuance terminal, the biometric details being provided by the user in response to the one or more instructions or steps and while completing the biometric template. Another step of the method comprises authenticating, by the card issuance terminal, the user after completion of the biometric template. Another step of the method comprises validating and completing, by the card issuance terminal, the biometric enrolment procedure for the biometric-enabled card upon positive authentication of the user.

The method steps may be performed in the indicated order. The method may be performed by the inventive system as described herein. Accordingly, the features and functionalities of the inventive system as described above may apply to the inventive method and vice versa.

According to an aspect, a card issuance terminal for issuing a biometric-enabled card and for enabling enrolment of the biometric-enabled card is provided. The card issuance terminal comprises a Near Field Communication (NFC) unit and a human machine interface (HMI). The card issuance terminal is configured to communicate with a biometric-enabled card via a secured communication channel using the NFC unit. The card issuance terminal is further configured to initiate a biometric enrolment procedure for the biometric-enabled card via the NFC unit. The card issuance terminal is further configured to provide, via the human machine interface, one or more instructions or steps for providing guidance for placement of the biometric-enabled card near the NFC unit and for providing a biometric template for the biometric enrolment procedure. The card issuance terminal is further configured to receive, from the biometric-enabled card, biometric details being provided by a user in response to the one or more instructions or steps and while completing the biometric template. The card issuance terminal is further configured to authenticate the user after completion of the biometric template. The card issuance terminal is further configured to validate and complete the biometric enrolment procedure for the biometric-enabled card upon positive authentication of the user.

Exemplary embodiments of the invention are explained in more detail below with reference to schematic drawings.
- Fig. 1: shows a system for enabling enrolment of a biometric-enabled card.
- Fig. 2: shows a schematic illustration of components of a biometric-enabled card.
- Fig. 3: shows a flow diagram of a method for enabling enrolment of a biometric-enabled card.

In the drawings, identical or functionally identical elements are provided with the same reference signs.

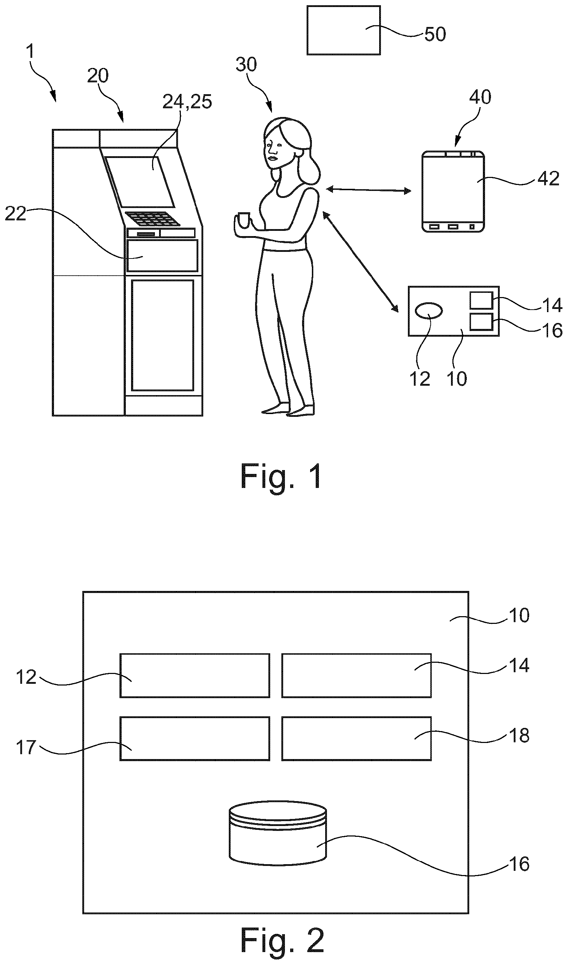

Fig. 1 shows a system 1 for enabling enrolment of a biometric-enabled card 10. The biometric-enabled card 10 may be a payment card or a smart card. The different components and functions of the biometric-enabled card 10 will be described in more detail with respect to Fig. 2. The system 1 further comprises a card issuance terminal 20, herein also referred to as kiosk, comprising a Near Field Communication (NFC) unit 22, e.g., an NFC chip encoder, and a human machine interface (HMI) 24.

The card issuance terminal 20 may be configured to issue the biometric-enabled card 10 to a user 30. That is, the card issuance terminal 20 may enable an enrolment of a biometric-enabled card 10 which is instantly issued at the card issuance terminal 20. In this case, the card issuance terminal 20 may directly issue the biometric-enabled card 10 to the user 30 before starting a biometric enrolment procedure, i.e., before the user 30 uses the issued card 10 to go through the enrolment procedure.

In addition, the card issuance terminal 20 may be configured to enable an enrolment of a biometric-enabled card 10 which was already issued beforehand, for example by another issuance terminal, and which is brought by the user 30, e.g., a cardholder, to the card issuance terminal 20 shown in Fig. 1. In this case, the card issuance terminal 20 may be used for renewal of an already existing biometric-enabled card 10 of the user 30 who brings along the card 10 for the enrolment procedure in order to renew this existing card 10. For example, the card 10 may have been issued by a third-party card issuance terminal and is brought to the card issuance terminal 20 shown in Fig. 1 for biometric enrolment of the biometric-enabled card 10. In particular, the biometric-enabled card 10 may be issued by any provider or issuer and the biometric enrolment procedure provided by the card issuance terminal 20 may be used to allow a biometric enrolment of biometric-enabled cards 10 which are issued by third parties.

The biometric-enabled card 10 comprises, inter alia, a biometric sensor 12 and a processing unit 14 operatively coupled to the biometric sensor 12. The biometric sensor 12 may be a fingerprint sensor. In particular, the biometric sensor 12 may include optical scanners, capacitance scanners, ultrasonic scanners, and thermal scanners which are able to detect the presence and the appearance of a fingerprint of the user 30. The detection of a fingerprint of the user 30 may be required to initiate the biometric enrolment procedure as described herein.

The processing unit 14 may be configured to establish a secured communication channel between the biometric-enabled card 10 and the card issuance terminal 20 via the NFC unit 22, upon initiation of a biometric enrolment procedure. As indicated above, the biometric enrolment procedure may be initiated by the user 30, for example when an enrolment request is raised by the user 30. The enrolment request may be raised at the card issuance terminal 20 upon operatively connecting the card 10 to the corresponding terminal 20 while placement of a finger on the biometric sensor 12 by the user.

Alternatively or additionally, the card issuance terminal 20 may be configured to establish the secured communication channel between the biometric-enabled card 10 and the card issuance terminal 20 when the card 10 is placed within a card placement region near the card issuance terminal 20, e.g., near the NFC unit 22. In particular, the user 30 may be prompted to place the card 10 in a specified area for the biometric enrolment procedure, which operatively connects the card 10 with the card issuance terminal 20 using the NFC encoder. In other words, the secured communication channel between the biometric-enabled card 10 and the card issuance terminal 20 may be established upon placement of the card 10 within the specified area, i.e., within the card placement region near the NFC unit 22.

Upon establishing the secured communication channel between the biometric-enabled card 10 and the card issuance terminal 20, the card issuance terminal 20 may initiate the biometric enrolment procedure via the NFC unit 22. The communication between the biometric-enabled card 10 and the card issuance terminal 20 may be carried out at least partly or preferably entirely via the NFC unit 22 of the card issuance terminal 20.

After having initiated the biometric enrolment procedure, the card issuance terminal 20 may provide, via the HMI 24, one or more instructions or steps for providing guidance for placement of the biometric-enabled card 10 near the NFC unit 22, i.e., for placement of the biometric-enabled card 10 within the card placement region of the card issuance terminal 20. Furthermore, the card issuance terminal 20 may provide a biometric template for the biometric enrolment procedure. The biometric template may include information about a physical property of the user 30, such as a fingerprint information or the like, e.g., after this information has been provided by the user. The instructions or steps for providing the biometric template may thus include an instruction to the user 30 to place a finger onto the biometric sensor 12 of the card 10. The corresponding instructions and/or steps may be output via the HMI 24, e.g., via the display unit 25 which may be a monitor integrated into the card issuance terminal 20.

After the user 30 has placed a finger onto the biometric sensor 12 of the card 10, a corresponding fingerprint information may be sent from the card 10 via the NFC unit 22 to the card issuance terminal 20. In other words, the card 10 may allow the biometric sensor 12 to capture biometric details of the user 30, which in this case includes a fingerprint information that is transmitted to the card issuance terminal 20.

The card issuance terminal 20 may receive, from the biometric-enabled card 10, the biometric details being provided by the user 30 and may complete the biometric template. The biometric template may include further personal and/or biometric information which are requested from the user 30 via the HMI 24. For example, the user 30 may input via the HMI 24 said further personal and/or biometric information in order to complete the biometric template.

After completion of the biometric template, the user 30 may be authenticated using an authentication procedure, for example using a Two-Factor-Authentication (2FA). This authentication may incorporate further devices, such as a mobile device 40 or server 50. The server 50, for example a server 50 of an issuer or provider of the biometric-enabled card 10, may generate a one-time password (OTP) and/or a unique password which is sent to the user 30, in particular, to a mobile device 40 associated with the user 30. The user may be required to input the one-time password (OTP) and/or a unique password into the mobile device 40 and/or directly into the card issuance terminal 20. In the first case, the card issuance terminal 20 may configured to receive the input one-time password (OTP) and/or the input unique password from the user 30 via the mobile device 40. This input one-time password (OTP) and/or unique password may also be transmitted to the terminal 20 via the secured communication channel established via the NFC unit 22. Afterwards, the card issuance terminal 20 may transmit an enrolment completion confirmation message to the mobile device 40 of the user 30, if the authentication of the user 30 is affirmative, i.e., positive. If the authentication of the user 30 is negative, an alert message may be transmitted from the card issuance terminal 20 to the mobile device 40 of the user 30. The input of the one-time password (OTP) and/or the input of the unique password into the mobile device 40 and the output of the enrolment completion confirmation message via the mobile device 40 may be performed via an HMI 42 of the mobile device 40, e.g., via a touchscreen of the mobile device 40 or the like. After successful authentication of the user 30, the card issuance terminal 20 may validate and complete the biometric enrolment procedure of the biometric-enabled card 10. This may include setting a pin for the biometric-enabled card 10, etc. Furthermore, the biometric template may be stored in a data storage unit 16 of the biometric-enabled card 10.

With reference now to Fig. 2, a schematic illustration of the various components of the biometric-enabled card 10 is provided. The card 10 may include the biometric sensor 12 configured to capture the biometric details of the user 30 as explained above. The card 10 may further include the processing unit 14 such as but not limited to a microprocessor or a processor coupled to a data storage unit 16 storing instructions that causes the processor unit 14 to perform one or more designated operations as described herein. Furthermore, the card 10 can include a communication interface 17 such as an antenna, a transceiver, and an NFC (Near Field Communication) module, but not limited thereto, to establish a connection with the card issuance terminal 20 (cf. Fig. 1) when the card 10 is inserted in a card slot of the terminal 20 or when the card 10 is brought in proximity to the terminal 20. In addition, the data storage unit 16 of the card 10 may store the details of the above-mentioned biometric template of the corresponding user 30, which may allow the card 10 to authenticate the user 30 every time the user 30 wishes to access or use the card 10 at a terminal, for example a banking terminal, or for online payment. Furthermore, the card 10 may also include an energy storage unit 18 such as a battery, e.g., a flexible battery, to provide electrical power to the biometric sensor 12, the processing unit 14, and/or the communication interface 17. However, the card 10 may also receive electrical energy from the card issuance terminal 20 once connected to the terminal 20. The energy storage unit 18 may be a thin-film battery, a printed battery, or a micro-battery, but is not limited thereto. The biometric sensor 12, the processing unit 14, the communication interface 17, the energy storage unit 18, and the data storage unit 16 may be disposed in a multilayer substrate that can be made of plastic and the like, such that the biometric sensor 12 remains accessible from outside to capture biometric details of the user 30. The card 10 may be a payment card that allows the user 30 to make payment at respective terminals or on online platforms upon authentication of the user 30. The card 10 may also be a smart card that can be used at automated gates of one or more locations selected from buses, railway stations, parking spaces, metro, ATMs, banks, offices, schools, and colleges, but not limited thereto, to enter or exit from the corresponding locations upon authentication of the user 30.

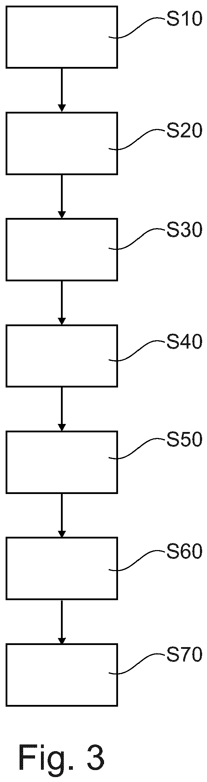

Fig. 3 shows a flow diagram of a method for enabling enrolment of a biometric-enabled card 10. In an example, the method may be carried out using the system 1 as described with respect to Fig. 1 and/or using the biometric-enabled card 10 as described with respect to Fig. 2.

A step S10 of the method comprises initiating, by a card issuance terminal 20, a biometric enrolment procedure via a Near Field Communication (NFC) unit 22 of the card issuance terminal 20. In particular, step S10 may comprise raising a request at the card issuance terminal 20 for starting the biometric enrolment procedure in which the card 10 is operatively connected to the terminal 20.

Another step S20 of the method comprises providing, via a human machine interface (HMI) 24 of the card issuance terminal 20, one or more instructions or steps for providing guidance for placement of the biometric-enabled card 10 near the NFC unit 22 and for providing a biometric template for the biometric enrolment procedure. In particular, step S20 may comprise prompting the user 30 to place the card 10 in a specified area for the biometric enrolment procedure, which operatively connects the card 10 with the terminal 20 using the NFC unit 22. That is, when the user 30 places the card 10 within the specified area, the card 10 may be detected and an NFC communication can be established between the card 10 and the terminal 20.

Accordingly, a further step S30 of the method comprises establishing, by the biometric-enabled card 10, a secured communication channel between the biometric-enabled card 10 and the card issuance terminal 20 via the NFC unit 22 upon initiation of the biometric enrolment procedure and/or upon placement of the card 10 within the specified area near the NFC unit 22. The secured communication channel may be provided between the communication interface 17 of the biometric-enabled card 10 and the NFC unit 22 of the card issuance terminal 20.

Another step S40 of the method comprises capturing, by the biometric-enabled card 10, biometric details of a user 30. For example, the user 30 is prompted to place a finger on the biometric sensor 12 of the card 10. A corresponding instruction may be provided via the HMI 24 of the terminal 20. Furthermore, the user 30 may be prompted to place a finger on a monitor or screen of a display unit 25 which is part of the HMI of the terminal 20. A corresponding instruction may be displayed for this guidance about placing the finger on the screen. An audible and/or visual guidance may be presented to the user 30 to guide the user 30 through the biometric enrolment procedure which will continue until the enrollment is complete or unsuccessful.

Another step S50 of the method comprises receiving, by the card issuance terminal 20, the biometric details being provided by the user 30 in response to the one or more instructions or steps and while completing the biometric template. The biometric details may be transmitted from the card 10 via the NFC unit 22 to the card issuance terminal 20. As described above, all data transmitted between the card 10 and the terminal 20, including the biometric data, may be sent via the secured communication channel, such that this data is prevented from being accessed by fraudulent activity or the like.

Another step S60 of the method comprises authenticating, by the card issuance terminal 20, the user 30 after completion of the biometric template. In particular, an OTP and/or a unique password required for authentication may be provided by a server 50 (cf. Fig. 1) or via an application programming interface of the issuer or provider of the biometric-enabled card 10. For example, the OTP and/or the unique password may be sent to the mobile device 40 (cf. Fig. 1), for example a mobile phone, a smartphone, a tablet or the like, which is associated to the user 30. The card issuance terminal 20 may transmit a request to the server 50, issuer or provider to send the OTP and/or the unique password to a mobile number of the mobile device 40 of the user 30. Having received the OTP and/or the unique password at the mobile device 40, the user 30 is asked via the mobile device 40 and/or via the HMI 24 of the card issuance terminal 20 to enter the OTP and/or the unique password into the mobile device 40 and/or directly into the card issuance terminal 20. Once the OTP and/or the unique password has been input and thus received by the mobile device 40, the user 30 may be informed about a successful and thus positive authentication via the mobile device 40 and/or via the card issuance terminal 20.

Upon positive authentication of the user 30, the card issuance terminal 20 may further to transmit, via the NFC unit 22, an authentication information to the biometric-enabled card 10 indicating that the biometric template is to be stored on the biometric-enabled card 10.

The biometric template may include the personal and/or biometric information of the user 30 which has been provided by the user 30 during the biometric enrolment procedure. Together with the authentication information, this personal and/or biometric information may be sent to the biometric-enabled card 10, for example via the NFC unit 22, enabling the biometric-enabled card 10 to save the biometric template and thus the personal and/or biometric information of the user 30 on the card 10 itself. The biometric template and the corresponding personal and/or biometric information may also be transmitted via the secured channel established between the card issuance terminal 20 and the card 10. The processing unit 14 of the biometric-enabled card 10 may be configured to store the biometric template in the data storage unit 16 of the biometric-enabled card 10, upon positive authentication of the user 30.

Another step S70 of the method comprises validating and completing the biometric enrolment procedure of the biometric-enabled card 10 upon positive authentication of the user 30. For example, upon successful password verification and/or upon receiving the authentication information by the card 10, the card 10 may store the biometric template on the card 10 and/or change the card status to "ready for biometric verification". In other words, the biometric-enabled card 10 is now ready to be used by the user 30 for accessing services, e.g., banking services, online platform services or the like, which are enabled by the card 10.

## Claims

1. A system (1) for enabling enrolment of a biometric-enabled card (10), comprising:
a biometric-enabled card (10), and
a card issuance terminal (20) comprising a Near Field Communication (NFC) unit (22) and a human machine interface (HMI) (24),
wherein the card issuance terminal (20) is configured to issue the biometric-enabled card (10) to a user (30);
wherein the biometric-enabled card (10) comprises:
a biometric sensor (12); and
a processing unit (14) operatively coupled to the biometric sensor (12),
wherein the processing unit (14) is configured to:
establish a secured communication channel between the biometric-enabled card (10) and the card issuance terminal (20) via the NFC unit (22), upon initiation of a biometric enrolment procedure;
allow the biometric sensor (12) to capture biometric details of the user (30) upon initiation of the biometric enrolment procedure;
wherein the card issuance terminal (20) is configured to:
initiate the biometric enrolment procedure via the NFC unit (22);
provide, via the HMI (24), one or more instructions or steps for providing guidance for placement of the biometric-enabled card (10) near the NFC unit (22) and for providing a biometric template for the biometric enrolment procedure;
receive, from the biometric-enabled card (10), biometric details being provided by the user (30) in response to the one or more instructions or steps and while completing the biometric template;
authenticate the user (30) after completion of the biometric template; and
validate and complete the biometric enrolment procedure for the biometric-enabled card (10) upon positive authentication of the user (30).

2. The system (1) of claim 1,
wherein the NFC unit (22) is an NFC chip encoder which is integrated into the card issuance terminal (20).

3. The system (1) according to any one of the preceding claims,
wherein the HMI (24) comprises a display unit (25) for visually displaying the one or more instructions or steps for providing the guidance for placement of the biometric-enabled card (10) near the NFC unit (22) and for providing the biometric template for the biometric enrolment procedure.

4. The system (1) according to any one of the preceding claims,
wherein the biometric-enabled card (10) is selected from a group comprising a smart card and a payment card.

5. The system (1) according to any one of the preceding claims,
wherein the processing unit (14) is configured to establish the secured communication channel between the biometric-enabled card (10) and the card issuance terminal (20) via the NFC unit (22) when the biometric-enabled card (10) is placed according to the guidance for placement of the biometric-enabled card (10) near the NFC unit (22).

6. The system (1) according to any one of the preceding claims,
wherein the card issuance terminal (20) is further configured to indicate, via the HMI (24) of the card issuance terminal (20), an instruction to the user (30) to at least once place a finger onto the biometric sensor (12) of the biometric-enabled card (10).

7. The system (1) according to any one of the preceding claims,
wherein the card issuance terminal (20) is configured to authenticate the user (30) after completion of the biometric template by:
receiving a one-time password (OTP) and/or a unique password from the user (30) via a registered mobile device (40); and
transmitting, on the registered mobile device (40) of the user (30), an enrolment completion confirmation message upon positive authentication of the user (30).

8. The system (1) according to any one of the preceding claims,
wherein, upon positive authentication of the user (30), the card issuance terminal (20) is further configured to transmit, via the NFC unit (22), an authentication information to the biometric-enabled card (10) indicating that the biometric template is to be stored on the biometric-enabled card (10).

9. The system (1) according to any one of the preceding claims,
wherein the processing unit (14) of the biometric-enabled card (10) is further configured to store the biometric template in a data storage unit (16) of the biometric-enabled card (10), upon positive authentication of the user (30).

10. The system (1) according to any one of the preceding claims,
wherein the processing unit (14) of the biometric-enabled card (10) is further configured to set an activation status for the biometric-enabled card (10), upon positive authentication of the user (30), thereby enabling one or more card functions provided by the biometric-enabled card (10).

11. The system (1) according to any one of the preceding claims,
wherein the card issuance terminal (20) is selected from a group comprising a Point-of-Sale (POS) terminal, an Automated Teller Machine (ATM), and a Near Field Communication (NFC) terminal.

12. The system (1) according to any one of the preceding claims,
wherein the biometric enrolment procedure is initiated at the card issuance terminal (20) upon operatively connecting the biometric-enabled card (10) to the card issuance terminal (20) while placing a finger on the biometric sensor (12) by the user (30).

13. The system (1) according to any one of the preceding claims,
wherein the card issuance terminal (20) is further configured to provide electrical energy to the biometric-enabled card (10) via the NFC unit (22).

14. A method for enabling enrolment of a biometric-enabled card (10), comprising:
initiating, by a card issuance terminal (20), a biometric enrolment procedure via a Near Field Communication (NFC) unit (22) of the card issuance terminal (20, S10);
providing, via a human machine interface (HMI) (24) of the card issuance terminal (20), one or more instructions or steps for providing guidance for placement of the biometric-enabled card (10) near the NFC unit (22) and for providing a biometric template for the biometric enrolment procedure (S20);
establishing a secured communication channel between the biometric-enabled card (10) and the card issuance terminal (20) via the NFC unit (22) upon initiation of the biometric enrolment procedure (S30);
capturing, by the biometric-enabled card (10), biometric details of a user (30, S40);
receiving, by the card issuance terminal (20), the biometric details being provided by the user (30) in response to the one or more instructions or steps and while completing the biometric template (S50);
authenticating, by the card issuance terminal (20), the user (30) after completion of the biometric template (S60); and
validating and completing, by the card issuance terminal (20), the biometric enrolment procedure for the biometric-enabled card (10) upon positive authentication of the user (30, S70).

15. A card issuance terminal (20) for issuing a biometric-enabled card (30) and for enabling enrolment of the biometric-enabled card (30), comprising:
a Near Field Communication (NFC) unit (22);
a human machine interface (HMI) (24),
wherein the card issuance terminal (20) is configured to:
communicate with a biometric-enabled card (10) via a secured communication channel using the NFC unit (22);
initiate a biometric enrolment procedure for the biometric-enabled card (10) via the NFC unit (22);
provide, via the human machine interface (24), one or more instructions or steps for providing guidance for placement of the biometric-enabled card (10) near the NFC unit (22) and for providing a biometric template for the biometric enrolment procedure;
receive, from the biometric-enabled card (10), biometric details being provided by a user (30) in response to the one or more instructions or steps and while completing the biometric template;
authenticate the user (30) after completion of the biometric template; and
validate and complete the biometric enrolment procedure for the biometric-enabled card (10) upon positive authentication of the user (30).
